# EUROPEAN PATENT APPLICATION

(11) **EP 3 175 716 A1**
(43) Date of publication of application: **07.06.2017**
(21) Application number: 16202182.8
(22) Date of filing: 05.12.2016
(51) Int. Cl.: A23L 7/126, A23G 3/48

(54) **FOOD BARS COMPRISING CAROB POWDER**

(30) Priority: 04.12.2015 BR 102015030473
(71) Applicant: Rotulo Montiani, Emilia Rosario, 13280-000 Sao Paulo State (BR)
(72) Inventor: Rotulo Montiani, Emilia Rosario, 13280-000 Sao Paulo State (BR)
(74) Representative: Hoffmann Eitle

(57) **Abstract**

"FORMULA FOR OBTAINMENT OF CAROB BARS ", object of this patent, aims to obtain a healthy, natural and at the same time tasty snack, in which a less toasted Carob specifically called "Alfarroba 3.0" is used in its composition, which results in a less bitter and more pleasant taste to the consumer. More specifically it deals with a formulation for the obtainment of food bars, which is different from products of the state of the art that incorporate transgenic elements, fractionated fat, colorings, flavorings, modified sugar, in their composition, the object of this patent application, called formula for obtainment of carob bars includes, powdered carob, maltitol, rice milk, cocoa butter / palm oil, Cranberry, Gojiberry, Raisin and Cashew Nut.

## Description

### FIELD OF INVENTION

This invention privilege patent aims at a formulation for obtainment of carob bars, pertaining to the field of industrialized foods, more accurately it deals with a formulation for the obtainment of a natural and healthy and, above all tasty snack, whose ingredients were diligently selected from the best that there is in the food bar production sector.

Therefore, in the patent application under discussion, an especially developed formulation is considered in order to obtain an original product of high nutritional quality and flavor.

Therefore, it concerns a perfectly and efficiently developed product, with the intention of offering a natural food product to serve a more demanding public and mainly those who have lactose and soy intolerance.

Furthermore, it is this application's objective to present a low-cost carob bar formula for its industrial feasibility, however, allied to nutritional and high quality requirements, thus offering the consumer public, an additional option in the congener market, which contrary to habitual products, offers countless benefits to its consumers, making it a product of vast acceptance in the market.

### BACKGROUND OF THE INVENTION

As it is of common knowledge, notably by experts on the matter, the carob tree is a wild tree, native of the Mediterranean coast. The carob is a comestible pod, similar to the dark brown and sweet-flavored bean, used in various industrial processes, particularly in cosmetic, food and pharmaceutical processes, whereby in the latter it is employed exclusively as a thickening agent to give shape to some tablets. The carob is a healthy food and with high nutritional value and more recently it has been added to various sweets.

### WEAKNESSES OF THE STATE OF THE ART

The vast inconvenience in the manufacture of chocolate bars, up to this moment, lies specifically on the quality of the products used in their formulation, which in many cases incorporate transgenic elements, fractionated fat, food colorings, flavorings, modified sugar, among others that are not recommended for a healthy and balanced food.

### SUMMARY OF THE INVENTION

It was by thinking of these inconveniences that, after numerous researches and studies, the inventor, a person related to the line of activity, created and developed the object of this patent, by idealizing a formula for the obtainment of carob bars.

Thus, this patent was designed aiming to obtain a food with less possible number of components, conveniently selected to obtain a healthy, natural and at the same time tasty snack, without the previously mentioned inconveniences.

An innovative formulation with all-complete nutritional qualities is presented in this patent application, developed in accordance with the most modern techniques that can be used in the sector.

The innovative formulation allows an excellent level of nutritional quality to be obtained, resulting into a healthy natural food and with appreciable taste.

The formula for the obtainment of carob bars, object of this patent, includes a strict selection of products used in its composition, such as non-transgenic products; rice milk; fractionated palm oil; cocoa butter, among other products that will be listed in the formulations below, characterizing, a totally natural and healthy product.

No type of coloring, flavoring, or modified sugar of any nature, is added. What is also found in chocolate bars of the state of the art, which it uses, is maltitol, which contributes in the manufacture of foods with low calorie value, low fat content and without sugar. Aside from this, it is of common knowledge that maltitol does not contribute with the formation of tooth decay.

In this product Alfarroba 3.0 (Carob 3.0) is used which is less toasted, and because of this fact its taste is smoother and consequently tastier than that presented currently to the public.

Thus, it must be understood that the formulation under discussion is extremely simple in its constitution, which is, therefore, easy to make feasible, however, excellent results are obtained, offering an innovative food formula over that which everyone already knows.

### DETAILED DESCRIPTION OF THE INVENTION

The "FORMULA FOR OBTAINMENT OF CAROB BARS ", object of this patent, aims to obtain a formulation for the production of a healthy, natural and at the same time tasty snack.

A less toasted Carob specifically called "Alfarroba 3.0" is used, which results in a less bitter and more pleasant taste to the consumer.

In reply to the clamor of the consumer public for really natural products and also to serve a more demanding public, the ingredients that comprise the formula, now under discussion, were rigorously chosen.

In the final tests a balance was achieved among all ingredients and a delicious taste of a totally inventive sweet was reached.

It is worth saying that this product is totally sugar-, gluten-, lactose- and soy-free.

**Table 1:**

| CAROB BARS WITH RICE MILK | |
|---|---|
| INGREDIENT | QUANTITY |
| Powdered Carob | 6 to 15% |
| Maltitol | 20 to 48% |
| Rice Milk | 2 to 34% |
| Cocoa Butter | 25 o 44% |

Optionally fractionated palm oil can be used instead of cocoa butter in the formulation, whose information is presented in table 2.

**Table 2:**

| CAROB BARS WITH RICE MILK | |
|---|---|
| INGREDIENT | QUANTITY |
| Powdered Carob | 6 to 15 % |
| Maltitol | 20 to 48% |
| Rice Milk | 2 to 23% |
| Fractionated Palm Oil | 15 o 37% |

Optionally Gojiberry and Cranberry can be added to the formulation, so that we may have an increase in nutritional value.

**Table 3:**

| CAROB BARS WITH RICE MILK, GOJIBERRY AND CRANBERRY | |
|---|---|
| INGREDIENT | QUANTITY |
| Powdered Carob | 4 to 12 % |
| Maltitol | 19 to 39% |
| Rice Milk | 2 to 19% |
| Cocoa Butter | 18 to 38% |
| Cranberry | 2 to 20% |
| Gojiberry | 2 to 20% |

**Table 4:**

| CAROB BARS WITH RICE MILK, GOJIBERRY AND CRANBERRY | |
|---|---|
| INGREDIENT | QUANTITY |
| Powdered Carob | 4 to 12 % |
| Maltitol | 19 to 39% |
| Rice Milk | 2 to 19% |
| Fractionated Palm Oil | 8 to 31% |
| Cranberry | 2 to 20% |
| Gojiberry | 2 to 20% |

Optionally Raisin and Cashew Nut can be added to the formulation.

**Table 5:**

| CAROB BARS WITH RICE MILK, RAISIN AND CASHEW NUT | |
|---|---|
| INGREDIENT | QUANTITY |
| Powdered Carob | 4 to 12 % |
| Maltitol | 19 to 39% |
| Rice Milk | 2 to 19% |
| Cocoa Butter | 18 to 38% |
| Raisin | 2 to 20% |
| Cashew Nut | 2 to 20% |

**Table 6:**

| CAROB BARS WITH RICE MILK, RAISIN AND CASHEW NUT | |
|---|---|
| INGREDIENT | QUANTITY |
| Powdered Carob | 4 to 12 % |
| Maltitol | 19 to 39% |
| Rice Milk | 2 to 19% |
| Fractionated Palm Oil | 8 to 31% |
| Raisin | 2 to 20% |
| Cashew Nut | 2 to 20% |

Thus it can be established through what has been explained that the formula for obtainment of carob food bars now under discussion is characterized as a product of great utility, which presents all practical and functional qualities that fully justify the application of invention privilege patent.

## Claims

1. "FORMULA FOR OBTAINMENT OF CAROB BARS", refers to a formula for obtainment of food bars, which is different from products of the state of the art that incorporate transgenic elements, fractionated fat, colorings, flavorings, modified sugar, in their composition, the object of this patent application, called formula for obtainment of carob bars is **characterized by** including, a product that uses a carob less toasted than others already known in the market, whereby the referred carob is called 3.0 which has a smoother and tastier flavor, aside from this the referred product has healthy ingredients and with low calorie value, we replace the sugar with maltitol which does not cause tooth decays, more specifically it deals with a formulation for the obtainment of food bars, which is different from products of the state of the art that incorporate transgenic elements, fractionated fat, colorings, flavorings, modified sugar, in their composition, the object of this patent application, called formula for obtainment of carob bars includes, powdered carob, maltitol, rice milk, cocoa butter / palm oil, Cranberry, Gojiberry, Raisin and Cashew Nut.
